# EUROPÄISCHE PATENTSCHRIFT

(11) **EP 4 114 776 B1**
(45) Veröffentlichungstag und Bekanntmachung des Hinweises auf die Patenterteilung: **03.01.2024**
(21) Anmeldenummer: 20713834.8
(22) Anmeldetag: 04.03.2020
(51) Int. Cl.: B66B 1/34

(54) **MESSBAND FÜR AUFZUGSANLAGEN**
MEASURING STRIP FOR ELEVATOR SYSTEMS
BANDE DE MESURE POUR SYSTÈMES D'ASCENCEUR

(43) Veröffentlichungstag der Anmeldung: 11.01.2023
(73) Patentinhaber: Grimm, Felix, 78239 Rielasingen (DE); Grimm, Moritz, 78262 Gailingen (DE)
(72) Erfinder: ROHR, Stephan, 9495 Triesen (LI); GRIMM, Felix, 78239 Rielasingen (DE); GRIMM, Moritz, 78262 Gailingen (DE)
(74) Vertreter: Patent- und Rechtsanwälte Behrmann Wagner PartG mbB
(86) Internationale Anmeldenummer: PCT/EP2020/055746
(87) Internationale Veröffentlichungsnummer: WO 2021/175421

(56) Entgegenhaltungen:
- CN-U- 210 051 288
- DE-A1- 10 005 890
- US-A- 5 925 859
- US-A1- 2006 118 364

## Beschreibung

Die vorliegende Erfindung betrifft ein Messband bzw. Messwertgeber zur Bestimmung der Position eines Fahrkorbs in einem Aufzugschacht und ein das Messband aufweisendes Messsystem.

Vorrichtungen zur Positionserkennung eines Fahrkorbs einer Aufzugsanlage sind aus dem Stand der Technik bereits bekannt. Diese dienen der Bereitstellung von Informationen über die aktuelle Position des Fahrkorbs entlang des Aufzugsschachts bzw. der zugehörigen Aufzugsschienen im Schacht. Neben einfachen Positionsgebern wie beispielsweise Schachtschaltern, welche über eine aktuelle Fahrkorbposition an vordefinierten Stellen im Aufzugsschacht Rückmeldung geben, existieren auch inkrementale Positionsgeber, welche an jeder Stelle im Schacht eine genaue Positionsbestimmung ermöglichen.

EP 3 231 753 lehrt beispielsweise eine Aufzugsanlage mit einem im Aufzugsschacht angeordneten Messband zur Positionsbestimmung des Fahrkorbs im Aufzugsschacht. Das Messband weist eine optische Kodierung in Form von aufeinanderfolgenden Positionsmustern, insbesondere 2D-Codes, zur Längenmessung auf. Am Fahrkorb ist eine Sensoreinrichtung befestigt, die eine Beleuchtungsquelle und einen Sensor umfasst, welche ein Detektionsfeld zum Detektieren des Messbandes und Auswerten einer entsprechenden Fahrkorbposition umfasst. Ein derartiges Messband ist üblicherweise als Stahlband ausgeführt, an welchem der optische Code aufgedruckt und mit einer Kunststoffschicht umschlossen ist.

Die Firma Fritz Kübler GmbH vertreibt ein System zur Positionserkennung eines Fahrkorbs in einem Aufzugsschacht, in welchem ein gelochtes Stahlband mittels eines am Fahrkorb angeordneten optischen Sensors abgetastet wird. Das Stahlband weist eine Positionskodierung in der Form von Bohrungen und/oder Langlöchern auf, welches mit Hilfe einer Lichtschranke berührungslos abgetastet wird.

Derartige optische Systeme weisen jedoch den Nachteil einer erhöhten Störanfälligkeit bei einer in die Mechanik des Aufzugssystems eintretenden Verschmutzung auf. Ebenfalls bekannt sind auf magnetischer Beeinflussung oder induzierten Wechselfelder basierende Systeme, In welchen eine Kodierung in ein Stahlband eingebracht ist oder magnetisch beeinflussbar eingekoppelt wird.

DE 10 2004 043 099 A1 offenbart beispielsweise eine Vorrichtung zur Positionsbestimmung eines Aufzugsfahrkorbs, wobei in ein parallel zu Aufzugsschienen gespanntes, elektrisch leitfähiges Seil elektromagnetische Wechselfelder eingebracht werden, die durch einen am Fahrkorb angeordneten Magneten beeinflusst werden. Eine nicht am Fahrkorb angeordnete Auswerteeinrichtung detektiert die Fahrkorbposition durch Erfassung einer durch den Magneten am Fahrkorb bewirkten Ablenkung.

EP 0 927 674 A1 offenbart einen am Fahrkorb bzw. Fahrzeug befestigte Lesekopf zur Auswertung eines entlang einer Schiene gespannten magnetisch kodierten Bands, wobei der Lesekopf magnetisch empfindliche Sensoren zur Positionsbestimmung mittels der Kodierung im Band aufweist.

US 5 925 859 A offenbart ein Stockwerkskontrollsystem mit einem länglichen nichtmagnetischen Streifen aus Stahl, der sich vertikal entlang der Länge des Schachtes erstreckt und entlang seiner Länge an vorbestimmten Stellen ein magnetisch kodiertes Klebeband aufweist, sowie einen Sensor zum Lesen der kodierten Information.

CN 210 051 288 U offenbart eine magnetische Positionsvorrichtung aufweisend einen Skalenkörper aus ferromagnetischem Material mit einem vorbestimmten Kodierungsmuster, eine Magnetisierungsvorrichtung mit einem Magneten, welcher ein strukturell ausgeglichenes Übergangsmagnetfeld bildet, und wobei der Skalenkörper das Übergangsmagnetfeld ändern kann, sowie einen Magnetfelddetektor, der in dem Übergangsmagnetfeld angeordnet und ausgebildet ist, ein Magnetfeld zu erfassen, das von der Magnetisierungsvorrichtung unter der Wirkung des Skalenkörpers gebildet wird.

US 2006/118364 A1 offenbart eine Einrichtung zum Erfassen einer Aufzugskabinenposition, wobei die Einrichtung ein Codemarkenmuster und eine Sensorvorrichtung umfasst. Das Codemarkenmuster ist entlang des Fahrwegs der Kabine angebracht und weist eine Vielzahl von Codemarken auf, die in einer einzigen Spur angeordnet sind. Die Sensoreinrichtung ist an der Kabine angebracht und tastet die Codemarken mit einer Vielzahl von Sensoren, die in einer einzigen Spur angeordnet sind, berührungslos ab.

Eine Problematik bei den bekannten Vorrichtungen und System ist die Aufrechterhaltung einer definierten Anordnung des Bandes im Aufzugsschacht unter Beibehaltung einer zuverlässigen Positionserkennung, insbesondere bei neugebauten Gebäuden, die sich erst nach einiger Zeit setzen, das heißt aufgrund von Materialbelastungen, Veränderungen in der Bausubstanz etc. eine Stauchung erfahren, wodurch insbesondere ein Wölben und/oder Verbiegen und im schlimmstenfalls eine Beschädigung des Bandes auftreten kann. Dies kann durch manuelles Nachjustieren oder durch eine zusätzlich vorzusehende Spann- und/oder Lagereinrichtung für das Band im Aufzugsschacht adressiert werden. Letztere kann jedoch einen deutlichen Kostenmehraufwand mit sich bringen und die Störanfälligkeit der Vorrichtung bzw. des Systems erhöhen.

Aufgabe der Erfindung ist es, einen verbesserten Messwertgeber, insbesondere ein Messband, und ein zugehöriges Messsystem bereitzustellen, welcher bzw. welches die oben genannten Nachteile des Standes der Technik überwindet oder zumindest deutlich abschwächt. Hierbei soll neben einer zuverlässigen Erfassung einer Fahrkorbposition im Aufzugsschacht eine einfache und kostengünstige Herstellbarkeit und vorzugsweise eine vereinfachte Anbringbarkeit im Aufzugsschacht ermöglicht werden. Diese Aufgabe wird durch den Gegenstand der unabhängigen Ansprüche gelöst. Die Unteransprüche stellen vorteilhafte Weiterbildungen der vorliegenden Erfindung dar. Die Erfindung adressiert zudem weitere Probleme, welche in der nachfolgenden Beschreibung erläutert sind.

In einem ersten Aspekt betrifft die Erfindung ein Messband zur Bestimmung der Position eines Fahrkorbs in einem Aufzugschacht, welches vertikal im Aufzugschacht und vorzugsweise sich über wenigstens zwei Gebäudestockwerke erstreckend anordenbar ist, aufweisend einen bandförmigen Grundkörper und eine mittels einem Magnetfeldsensor auslesbare Positionskodierung aus ferromagnetischem Material, wobei der bandförmige Grundkörper aus Textilmaterial gebildet ist, und dass die Positionskodierung in den Grundkörper eingebracht oder auf einer Oberfläche des Grundkörpers aufgebracht angeordnet ist.

Im Gegensatz zum bekannten Stand der Technik ist das Messband nunmehr nicht selbst aus einem ferromagnetischen Band wie beispielsweise Eisen gefertigt, sondern besteht aus einem Textilgrundkörper, in welchen die Positionskodierung eingebracht bzw. aufgebracht ist. Hierdurch wird einerseits ein leichteres Gesamtgewicht des Bandes als auch erweiterte Einsatzmöglichkeiten erreicht. Insbesondere ist der Einsatz des Messbandes auch in rauen Umweltbedingungen, beispielsweise bei Salzwassereinfluss, wie beispielsweise für die Positionsbestimmung auf Schiffen, Windkraftanlagen, Werften etc. geeignet. Zudem weist der textile Grundkörper eine höhere Banddehnung und Flexibilität als die bekannten Stahlmessbänder auf, wodurch der Einbau und die Positionierung in einem Aufzugsschacht vereinfacht wird. Des Weiteren ermöglicht das erfindungsgemäße Messband auch eine einfachere und schnellere Fertigung. Insbesondere ist im Gegensatz zum Stand der Technik keine aufwendige Verklebung aus einem Stahlband und einer Gummimischung und eine darauffolgende Magnetisierung mehr notwendig.

In einer bevorzugten Ausführungsform ist die Positionskodierung derart ausgebildet ist, dass diese bei externer Anregung mittels einem oder mehreren Permanentmagneten ein temporäres und durch den Magnetfeldsensor auslesbares Magnetfeld ausbildet. Das ferromagnetische Material ist dabei vorzugsweise nicht magnetisiert, d.h. es sind keine Permanentmagneten bzw. Pole in der Positionskodierung eingebracht oder ausgebildet. Dies hat gegenüber permanentmagnetisierten Messbändern aus dem Stand der Technik den Vorteil, dass das Messband nicht an magnetisch leitenden Gegenständen im Fahrstuhlschacht anhaftet und zudem unempfindlich gegenüber einer möglichen Entmagnetisierung durch andere starke Permanentmagnete, insbesondere im Fahrstuhlschacht vorgesehene Stockwerksmagnete, ist. Hierdurch werden auch die Anordnungsmöglichkeiten im Fahrstuhlschacht erweitert.

Alternativ kann die Positionskodierung auch magnetisierte Pole aufweisen, welche in das ferromagnetische Material eingebracht sind. Hierdurch kann entlang des Messbandes eine Positionskodierung mit permanenter Magnetisierung ausgebildet werden. Dies kann beispielsweise mittels bereits magnetisierter Fäden bzw. Drähten erfolgen, welche an entsprechender Stelle in das Textilmaterial eingewebt werden.

Die Positionskodierung kann ein beliebiges ferromagnetisches Material aufweisen. Bevorzugt besteht das ferromagnetische Material aus Stahl oder Eisen, insbesondere in der Form von entsprechendem Draht bzw. Faden, beispielsweise aus Stahldraht. Dieser weist vorzugweise einen Durchmesser von 0,5 bis 2mm, mehr bevorzugt von 0,7 bis 1mm auf.

Der bandförmige Grundkörper ist vorzugsweise aus Textilmaterial, insbesondere Textilfaser, gewebt oder gewirkt. Alternativ kann der Grundkörper auch gesponnen oder gestickt sein.

In einer bevorzugten Ausführungsform weist der bandförmige Grundkörper eine vorzugsweise homogene Breite von 8 bis 20mm, mehr bevorzugt von 8 bis 14mm, senkrecht zur Längserstreckungsrichtung auf. Die Länge des bandförmigen Grundkörpers ist auf den jeweiligen Aufzugsschacht angepasst, in welchem dieser angeordnet werden soll. Beispielhaft kann dies für ein fünfstöckiges Gebäude eine Länge von circa 15m aufweisen.

Der Grundkörper ist vorzugsweise als ein zusammenhängender Körper ausgebildet. Dies bedeutet, dass der Grundkörper insbesondere keine Ausschnitte, Löcher, Langlöcher oder sonstige Aussparungen aufweist. In anderen Worten ist der Grundkörper vorzugsweise als im Wesentlichen homogener bandförmiger Körper ausgebildet. Die textile Ausbildung des Grundkörpers ist hierbei vorzugsweise über die gesamte Längsrichtung homogen. Beispielsweise erstrecken sich bei einem gewebten Grundkörper die länglichen Kettfäden vorzugsweise über die gesamte Länge des Messbands. Hierdurch werden homogene Materialeigenschaften über die gesamte Messbandlänge und insbesondere eine verbesserte homogene Festigkeit des Messbands erzielt, dies insbesondere gegenüber aus dem Stand der Technik bekannten Stahlbändern mit gestanzten oder gelochten Aussparungen und/oder Langlöchern.

In einer bevorzugten Ausführungsform ist das ferromagnetische Material der Positionskodierung in den Grundkörper eingebracht, insbesondere eingewebt. Das ferromagnetische Material weist hierbei vorzugsweise eine Vielzahl an längs zur Erstreckungsrichtung des Grundkörpers verlaufende Kettfäden und/oder quer zur Erstreckungsrichtung des Grundkörpers verlaufende Schussfäden, vorzugsweise aus Stahldraht, auf.

In einer alternativen Ausführungsform ist das ferromagnetische Material der Positionskodierung auf eine Oberfläche des Grundkörpers aufgebracht, insbesondere aufgedruckt. Hierbei umfasst das ferromagnetische Material vorzugsweise Ferritpulver, welches auf die Oberfläche des textilen Grundkörpers aufgedruckt ist.

Die Positionskodierung weist vorzugsweise eine Vielzahl von in Längsrichtung des Grundkörpers vorzugsweise aufeinanderfolgend angeordnete und mittels Magnetsensor magnetisch unterscheidbare Bereiche auf. Die magnetisch unterscheidbaren Bereiche sind vorzugsweise zum jeweiligen Zusammenwirken mit vorzugsweise seitlich des Messbands angeordneten Permanentmagneten unterschiedlicher Polung ausgebildet. Die magnetisch unterscheidbaren Bereiche umfassen vorzugsweise wenigstens einen ersten Bereich, welcher mit einem dem Messband zugeordneten ersten Permanentmagneten (bspw. Nordpol) zur Ausbildung eines ersten Magnetfelds zusammenwirken kann und wenigstens einen zweiten Bereich, welcher mit einem dem Messband zugeordneten zweiten und anderspoligen Permanentmagneten (bspw. Südpol) zur Ausbildung eines zweiten, vom ersten Magnetfeld unterscheidbaren Magnetfelds zusammenwirken kann. Die magnetisch unterscheidbaren Bereiche können alternativ auch durch eine permanente Magnetisierung des ferromagnetischen Materials, insbesondere als Süd- oder Nordpol, ausgebildet sein.

Die magnetisch unterscheidbaren Bereiche können in Längserstreckungsrichtung des Bandes alternierend angeordnet sein. Hierdurch kann insbesondere eine inkrementelle Positionskodierung bereitgestellt werden. Die magnetisch unterscheidbaren Bereiche können in Längserstreckung auch sequentiell oder absolut kodiert angeordnet sein. Hierbei können die jeweiligen Bereiche in Längserstreckungsrichtung in einer vordefinierten Anordnung oder Abfolge vorliegen. Dabei kann insbesondere die jeweilige Erstreckungslänge in Längsrichtung und/oder die jeweilige Bereichsart, d.h. geeignet zur Ausbildung eines ersten oder zweiten Magnetfelds, in Längsrichtung des Messbands variieren oder unregelmäßig ausgebildet sein.

Die magnetisch unterscheidbaren Bereiche sind vorzugsweise jeweils durch eine vorzugsweise homogen meanderförmige Ausbildung oder Anordnung eines ferromagnetischen Materials gebildet. Insbesondere können die magnetisch unterscheidbaren Bereiche aus einem Stahldraht mit im Wesentlichen homogenen Durchmesser geformt sein, welcher im Textilmaterial eingebracht, vorzugsweise eingewebt oder eingewirkt ist.

Die magnetisch unterscheidbaren Bereiche weisen vorzugsweise eine jeweils homogene Erstreckung in Längserstreckungsrichtung des Messbandes auf. Die jeweilige Erstreckung in Längserstreckungsrichtung liegt vorzugsweise zwischen 5 und 15 mm, mehr bevorzugt zwischen 7 und 12 mm.

Die jeweiligen magnetisch unterscheidbaren Bereiche sind vorzugsweise einer jeweiligen Längsseite des Messbands zum jeweiligen Zusammenwirken mit seitlich des Messbands anordenbaren Permanentmagneten zugeordnet. Dies bedeutet, dass sich die jeweiligen Bereiche nicht über die komplette Breite des Messbands erstrecken, sondern jeweils näher an einer der beiden Längsseiten des Messseiten angeordnet sind. In Draufsicht auf das Messband sind die jeweiligen unterschiedlichen Bereiche in Längsrichtung des Messbands somit vorzugsweise aufeinander folgend und seitlich versetzt zueinander angeordnet.

In einer bevorzugten Ausführungsform weist das Messband sich quer zur Verlaufsrichtung bzw. Längserstreckungsrichtung des Messbands erstreckende und zwischen den einzelnen magnetischen Bereichen angeordnete und/oder sich parallel zu einem Seitenrand des Messbands erstreckende Isolierungsmittel aus nicht magnetisch leitbarem Material, insbesondere Kunststoffmaterial, auf. Durch diese Isoliermittel kann eine optimierte temporäre Ausbildung des jeweiligen Magnetfelds unter Zusammenwirkung des jeweiligen Bereichs mit einem jeweiligen, zum Zusammenwirken mit dem Bereich vorgesehenen, Permanentmagneten erfolgen.

Die Isoliermittel können beispielsweise aus Kunststofffäden gebildet sein, welche in das Textilmaterial eingearbeitet, insbesondere eingewebt oder eingewirkt sind. Die Isoliermittel können alternativ auf eine Oberfläche des Grundkörpers aufgeklebt sein. Die Isoliermittel weisen vorzugsweise einen Durchmesser von 0,5 bis 2mm, mehr bevorzugt von 0,8 bis 1,5mm auf.

Das Messband kann in den Grundkörper in Längsrichtung eingearbeitete, insbesondere eingewebte oder eingewirkte, und vorzugsweise nicht-kraftaufnehmend ausgebildete Funktions- und/oder Signalleitungen aufweisen. Diese können zur Signalübertragung entlang des Messbands dienen und an vorgesehenen Kontaktstellen mittels externer Komponenten zur Signalleitung kontaktiert werden.

Das Messband kann eine auf dem Grundkörper aufgebrachte und die Positionskodierung abdeckende Abdeckschicht aufweisen. Diese ist vorzugsweise aus gewebtem oder gewirktem Textilmaterial gebildet. Die Abdeckschicht kann alternativ aus anderem Material, beispielsweise aus Kunststoff gebildet sein.

Das Messband kann Reflektoren aufweisen, welche in das Textilmaterial des Grundkörpers eingebracht, insbesondere eingewebt oder eingewirkt sind. Diese können beispielsweise durch geeignete Anordnung Informationen bereitstellen, welche beispielsweise mit einem optischen Sensor auslesbar sind.

In einem weiteren Aspekt betrifft die Erfindung ein Messsystem aufweisend ein Messband wie zuvor beschrieben und eine Sensoranordnung aufweisend wenigstens einen Magnetfeldsensor zur Auslesung der Positionskodierung des Messbands. In einer besonders bevorzugten Ausführungsform weist die Sensoranordnung des Systems wenigstens einen Permanentmagneten zur temporären Magnetisierung des ferromagnetischen Materials der Positionskodierung des Messbands auf, wobei der wenigstens eine Magnetfeldsensor zum Auslesen des dabei erzeugten temporären Magnetfelds ausgebildet ist.

Die Sensoranordnung ist dabei zur positionsfesten Anordnung an einem Fahrkorb eines Aufzugssystems vorgesehen. Der Fahrkorb mit daran befestigter Sensoranordnung fährt hierbei entlang des Messbands im Aufzugsschacht, wobei durch das Zusammenwirken von Messband und zugeordneter Sensoranordnung eine Positionsbestimmung des Fahrkorbs im Aufzugschacht ermöglicht wird.

Die Sensoranordnung ist vorzugsweise dazu eingerichtet, die Lage, Geschwindigkeit und/oder Beschleunigung eines zugeordneten Fahrkorbs durch Auslesen des Messbands an eine übergeordnete Steuerung weiterzugeben. Dies erfolgt vorzugsweise über ein Auslesen bzw. eine Abtastung der permanent vorhandenen oder temporär erzeugten Magnetfelder des Messbands und/oder der zwischen den jeweiligen Magnetfeldern auftretenden Feldsprünge bei Bewegung der Sensoranordnung entlang des Messbands. Die Sensoranordnung und/oder die Steuerung kann hierzu einen entsprechend konfigurierten Mikrokontroller aufweisen.

In einer bevorzugten Ausführungsform weist das Messsystem wenigstens eine dem Messband zugordnete Führungsschiene mit seitlich des Messbands angeordneten Permanentmagneten unterschiedlicher Polung auf. Die Führungsschiene kann eine vorzugsweise nutförmige Vertiefung zur Aufnahme und Führung des Messbands und daran seitlich verlaufene Führungswangen aufweisen, in welchen vorzugsweise die Permanentmagneten angeordnet sind. Die Führungsschiene ist vorzugsweise derart angeordnet, dass sich die Magneten unterschiedlicher Polung entlang gegenüberliegender Seiten in Längsrichtung des Messbands erstrecken. Die Permanentmagneten weisen vorzugsweise eine Längserstreckung über eine Länge von 30 bis 600mm, mehr bevorzugt von 40 bis 550mm auf.

Der Magnetfeldsensor des Messsystems weist wenigstens einen, vorzugsweise eine Mehrzahl von in Reihe angeordneter Hall-Sensoren auf, welche parallel zur Verlaufsrichtung des Messbands angeordnet sind. Der Magnetfeldsensor ist vorzugsweise parallel zu einer Oberfläche des Messbands angeordnet. Der Magnetfeldsensor ist vorzugsweise gegenüberliegend zu einem Nutgrund der Vertiefung der Führungsschiene angeordnet, derart, dass das Messband zwischen Führungsschiene und Magnetfeldsensor, insbesondere sandwichartig, angeordnet ist bzw. verläuft.

In einer bevorzugten Ausführungsform weist die Sensoranordnung einen Flussverstärker auf, welcher zur Konzentration eines von dem Messband abgegebenen Magnetfelds ausgebildet ist. Der Flussverstärker weist vorzugsweise ein parallel zur Verlaufsrichtung des Messbands angeordnetes metallisches Element, beispielsweise ein Stahlblech, mit vorzugsweise homogenem Querschnitt auf. Der Flussverstärker ist vorzugsweise auf einer vom Messband abgewandten Seite des Magnetfeldsensors der Sensoranordnung angeordnet. Der Magnetfeldsensor kann demnach sandwichartig zwischen Magnetband und Flussverstärker angeordnet sein.

In einem weiteren Aspekt betrifft die Erfindung ein Aufzugsystem mit einem Aufzugschacht und einen darin verfahrbar angeordneten Fahrkorb, welches ein Messsytem zur Bestimmung der Position des Fahrkorbs im Aufzugschacht wie oben beschrieben aufweist.

Weitere vorteilhafte Einzelheiten der Erfindung ergeben sich aus der nachfolgenden Beschreibung bevorzugter Ausführungsbeispiele sowie anhand der Figuren. Diese zeigen in:
- **Fig. 1**: eine schematische Seitenansicht eines bevorzugten Ausführungsbeispiels eines erfindungsgemäßen Aufzugssystems;
- **Fig. 2**: eine Aufsicht auf eine bevorzugte Ausführungsform des erfindungsgemäßen Messbands mit zugeordneter Führungsschiene mit Permanentmagneten;
- **Fig. 3a**: eines perspektivische Seitenansicht des Messbands in einer zugeordneten Führungsschiene;
- **Fig. 3b**: eine perspektivische Seitenansicht eines Jochelements welches an die Führungsschiene anbringbar ist;
- **Fig. 4a**: eine perspektivische Seitenansicht einer Sensoranordnung des erfindungsgemäßen Messsystems;
- **Fig. 4b**: eine perspektivische Untersicht auf eine Sensoranordnung gemäß Fig. 4a;
- **Fig. 4c**: eine Schnittansicht einer bevorzugten Ausführungsform des erfindungsgemäßen Messsystems bestehend auf Messband und zugeordneter Sensoranordnung zum Auslesen der Positionskodierung; und
- **Fig. 5a,5b**: seitliche Ansichten des magnetischen Feldlinienverlaufs der Positionskodierung des Messbands beim Abtasten durch die Sensoranordnung.

In den Figuren sind gleiche Elemente und Elemente mit der gleichen Funktion mit den gleichen Bezugszeichen versehen.

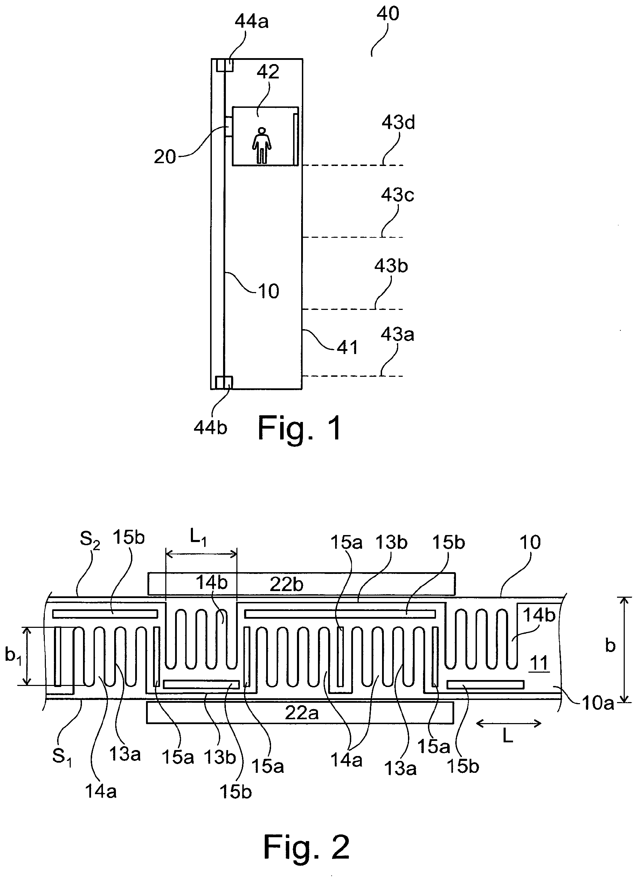

**Fig. 1** zeigt ein Aufzugssystem 40 aufweisend einen sich über mehrere Stockwerke 43a-d, beispielsweise eines Gebäudes, Schiffs, Kranauslegers oder Hochregallagers, erstreckenden Aufzugschacht 41 und einen darin verfahrbar angeordneten Fahrkorb 42. Das System weist zudem an sich bekannte Antriebsmittel (nicht gezeigt) auf, welche ein selektives Verfahren des Fahrkorbs 42 im Aufzugsschacht 41 ermöglichen. Zur Positionserkennung des Fahrkorbs im Aufzugschacht 41, weist das Aufzugssystem 40 ein unten näher beschriebenes erfindungsgemäßes Messsystem 30 auf, welches ein im Aufzugschacht 41 angeordnetes Messband 10 und eine mit diesem zusammenwirkende und am Fahrkorb 42 angeordneten Sensoranordnung 20 aufweist. Das Messband 10 erstreckt sich vertikal durch den gesamten Aufzugschacht 41 und ist mit Hilfe von vorgesehenen Befestigungsmittel 44a,44b im Aufzugschacht positionssicher gehalten.

**Fig. 2** zeigt eine schematische Aufsicht auf eine bevorzugte Ausführungsform des erfindungsgemäßen Messbands 10. Das Messband 10 umfasst einen bandförmigen Grundkörper 11 aus Textilmaterial. Dieser ist aus einem geeigneten textilen Garn, bestehend aus einer oder mehreren textilen Fasern, vorzugsweise mittels Weben oder Wirken zu einem sich längserstreckenden Band geformt. In der gezeigten Ausführungsform ist das Textilband ein Gewebe aus einer Vielzahl von Schuss- und Kettfäden. Hierbei nehmen die in Längsrichtung verlaufenden Kettfäden die Bandspannung auf.

Das Messband 10 weist vorzugsweise eine homogene Breite b von 8 bis 20mm, mehr bevorzugt von 8 bis 14mm senkrecht zur Längserstreckungsrichtung L des Messbands 10 auf. Die Länge L des Messbands 10 ist an die jeweilige Länge des Aufzugschachts 41 angepasst.

Das Messband 10 weist eine Positionskodierung aus ferromagnetischem Material auf, welche mittels eines Magnetfeldsensors 21 einer dem Band 10 zuordenbaren Sensoranordnung 20 auslesbar ist. Die Positionskodierung ist vorzugsweise im textilen Grundkörper 11 des Messbands eingebracht, insbesondere damit verwebt oder verwirkt. Das ferromagnetische Material ist hierbei vorzugsweise ein Metalldraht, insbesondere ein Stahldraht, welcher in den Grundkörper 11 eingearbeitet ist. Hierbei weist die Positionskodierung eine Vielzahl von längs zur Erstreckungsrichtung des Grundkörpers verlaufenden Kettfäden 13b und quer zur Erstreckungsrichtung des Grundkörpers verlaufenden Schussfäden 13a auf. Diese bilden ein vordefiniertes Muster im Grundkörper 11, mit welchem ersten und zweite magnetisch unterscheidbare Bereiche 14a, 14b geformt sind. Unter magnetisch unterscheidbare wird vorliegend verstanden, dass diese mittels eines zuordenbaren Magnetfeldsensor magnetisch unterscheidbar sind.

Wie abgebildet können die magnetisch unterscheidbaren Bereiche 14a, 14b insbesondere durch eine jeweilige meanderförmige Ausbildung oder Anordnung des ferromagnetischen Materials im Grundkörper 11 gebildet sein. Die magnetisch unterscheidbaren Bereiche 14a,14b sind hierbei vorzugsweise in Längsrichtung L des Grundkörpers 11 in einer vordefinierten Anordnung aufeinander folgend angeordnet und weisen jeweils eine vorzugsweise homogene Erstreckung L1 in Längsrichtung auf. Die jeweiligen Bereiche 14a,14b weisen zudem eine vorzugsweise homogene Breite b1 senkrecht zur Längsrichtung des Grundkörpers 11 auf. Hierdurch ergibt sich in Draufsicht auf das Messband 10 für den jeweiligen Bereich 14a,14b eine vorzugsweise quadratische oder rechteckige Fläche.

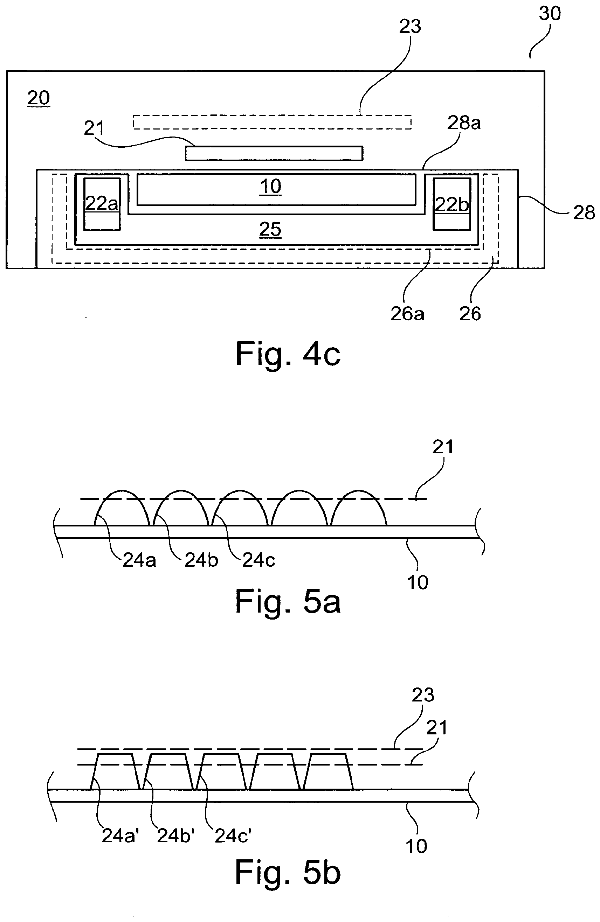

Die magnetisch unterscheidbaren Bereiche 14a,14b sind vorzugsweise zum jeweiligen Zusammenwirken mit seitlich des Messbands 10 angeordneten Permanentmagneten 22a,22b unterschiedlicher Polung ausgebildet. Diese Permanentmagneten 22a,22b erstrecken sich dabei in Längsrichtung L entlang einer jeweiligen Seitenkante S1,S2 des Messbands 10 über eine vordefinierte Länge. Die ersten Bereiche 14a sind näher an einer Seitenkante S1 des Messbands angeordnet, welche dem Permanentmagneten 22a zugeordnet ist bzw. welche angrenzend an diesen verläuft. Die zweiten Bereiche 14b sind näher an einer Seitenkante S2 des Messbands angeordnet, welche dem Permanentmagneten 22b zugeordnet ist bzw. welche angrenzend an diesen verläuft. Beim Durchlaufen des Messbands 10 durch die beiden stationären Permanentmagneten 22a,22b werden die ersten Bereiche 14a somit insbesondere durch den ersten Permanentmagneten 22a und die zweiten Bereiche 14b insbesondere durch den zweiten Permanentmagneten 22b temporär magnetisiert. Hierbei wird jeweils ein Magnetfeld 24a,24b,24c (vgl. Fig. 5a,5b) in der dritten Dimension ausgebildet, d.h. in einer Richtung senkrecht zur Oberfläche 10a des Messbands 10, welches durch einen zugeordnete Magnetfeldsensor 21 (vgl. Fig. 5a,5b) ausgelesen werden kann.

Das Messband 10 kann zudem über sich quer zur Verlaufsrichtung bzw.

Längsrichtung L des Messbands 10 erstreckende und zwischen den einzelnen Bereichen 14a,14b angeordnete und/oder sich parallel zu einem Seitenrand S1,S2 des Messbands erstreckende Isolierungsmittel 15a,15b aus nicht magnetisch leitbarem Material, insbesondere Kunststoffmaterial, aufweisen. Dieses kann vorzugsweise mittels Kunststofffaden ins Textilmaterial des Grundkörpers 11 eingebracht sein, beispielsweise eingewebt oder eingewirkt sein.

Durch die Isoliermittel 15a,15b wird das jeweilige Zusammenwirken der ersten und zweiten Bereiche 14a,14b mit dem jeweils zugeordneten Permanentmagneten 22a,22b optimiert. Insbesondere können hierbei die jeweiligen Bereiche 14a,14b von dem jeweils nicht zugeordneten Permanentmagneten 22a,22b, d.h. mit welchem diese nicht zusammenwirken sollen, insbesondre mit sich in Längsrichtung erstreckenden Isoliermitteln 15b abgeschirmt werden. Durch eine Anordnung von jeweils zwischen benachbarten Bereichen 14a,14b angeordneten und vorzugsweise quer zur Längsrichtung verlaufenden Isoliermittel 15a erfolgt eine optimierte magnettechnische Abgrenzung der jeweiligen benachbarten Bereiche.

Alternativ zur oben beschriebenen Ausführungsform können die magnetisch unterscheidbaren Bereiche 14a,14b permanent magnetisiert sein, beispielsweise durch ein Einbringung von jeweils bereits magnetisiertem ferromagnetischen Material beim Herstellungsprozess des Messbands 10, beispielsweise einem bereits magnetisierten Stahldraht, welcher dann für die jeweiligen Bereiche 14a,14b eine unterschiedliche Polung aufweist. Alternativ können die jeweiligen Bereiche 14a, 14b nach der Fertigung des Messbands entsprechend magnetisiert werden.

Ebenfalls alternativ zur vorgenannten Ausführungsform kann das ferromagnetische Material auf eine Oberfläche 10a des Messbands 10 gedruckt oder anderweitig aufgebracht sein. Beispielsweise kann das ferromagnetische Material als Ferritpulver zur Ausbildung von entsprechenden ersten und zweiten Bereiche 14a,14b aufgedruckt werden. Ebenso können die Isoliermittel 15a, 15b auf die Oberfläche 10a aufgedruckt oder geklebt werden.

Das Messband 10 kann zudem eine die Positionskodierung abdeckende Schicht (nicht gezeigt), vorzugsweise aus Textilmaterial aufweisen.

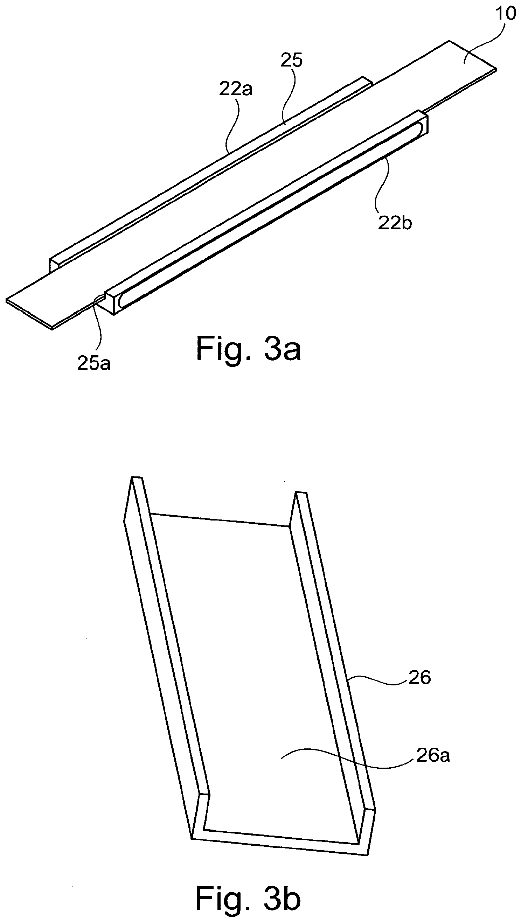

Fig. 3a zeigt eine Einzeldarstellung einer Führungsschiene 25 des Messsystems 30 (vgl. Fig. 4c), welche dem Messband 10 zugeordnet ist. Die Führungsschiene 25 weist längsseits rechts und links entlang einer Führungsnut 25a eine längliche Aussparung auf, in welcher jeweils ein Stabmagnet 22a,22b unterschiedlicher Polung eingelegt ist, Nord auf der einen und Süd auf der anderen Seite der Führungsschiene. Damit wird erreicht, dass sich der jeweilige Messbandabschnitt, der sich innerhalb der Führungsschiene 25 befindet wie oben beschrieben magnetisiert wird. Zwischen dem jeweiligen Magneten 22a,22b und der Führungsnut 25 können zusätzlich Flussverstärkungsmittel (nicht dargestellt) vorgesehen sein. Diese können beispielsweise längliche Stahlelemente umfassen, welche parallel zum jeweiligen Magneten 22a,22b und der Führungsnut 25a verlaufen und einen im Wesentlichen dreieckigen Querschnitt aufweisen. Hierdurch kann ein magnetischer Fluss von dem jeweiligen Magneten hin zur Führungsnut 25a konzentriert werden.

**Fig. 3b** zeigt ein Jochelement 26, welches zur Aufnahme der Führungsschiene 25 dient. Diese weist eine auf die Außenmaße der Führungsschiene 25 angepasste längliche Ausnehmung 26a auf. Das Jochelement 26 ist aus Metall geformt und dient vorzugsweise zum Kurzschließen der beiden Permanentmagnete 22a,22b der Führungsschiene 25. Hierdurch wird eine Konzentration des Magnetflusses erzielt, wodurch eine optimierte Ausbildung der temporären Magnetfelder bei Durchlaufen des Messbands 10 in der Führungsschiene 25 ermöglicht wird.

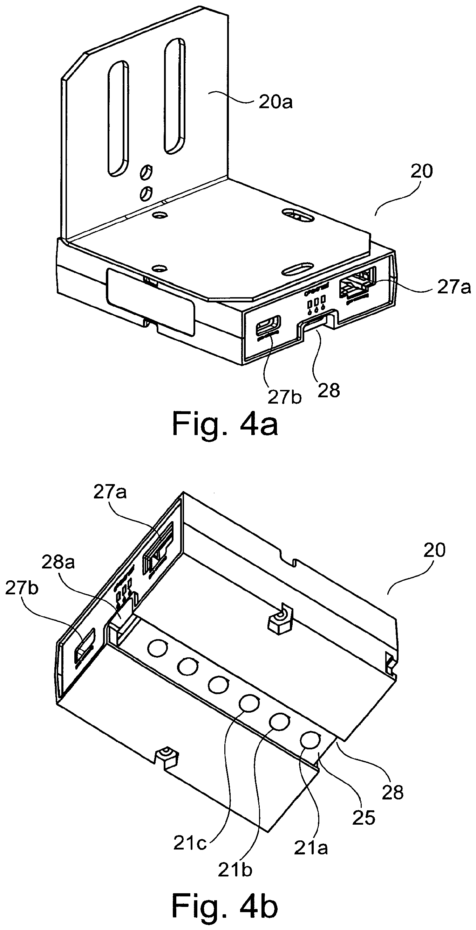

**Fig. 4a,4b** zeigen eine Sensoranordnung 20 zum Zusammenwirken mit dem Messband 10. Die Sensoranordnung 20 ist zur positionssicheren Anordnung an einem Fahrkorb 42 eines Aufzugsystems 40 ausgebildet und weist hierfür entsprechende Positioniermittel 20a auf, beispielsweise ein an sich bekannte Montagevorrichtung mit integrierten Verstellmitteln. Zur Einbindung der Sensoranordnung 20 in eine Aufzugssteuerung weist diese Anschlussmöglichkeiten 27a,27b auf.

Die Sensoranordnung 20 umfasst zudem eine längliche Ausnehmung 28, vorzugsweise auf einer Unterseite der Sensoranordnung, in welcher die zuvor beschriebene Führungsschiene 25 aufnehmbar bzw. einsetzbar ist. Ein in der Führungsnut 25a der Führungsschiene verlaufendes Messband 10 verläuft zwischen einer nach unten gerichtete Oberfläche 28a der Ausnehmung 28 und der Führungsnut 25a der Führungsschiene 25 und ist somit sandwichartig zwischen den vorgenannten Komponenten angeordnet. Der entsprechende Abstand zwischen Oberfläche 28a und Führungsnut 25a ist derart gewählt, dass das Messband 10 in der dadurch erzeugten Öffnung im Wesentlichen widerstandsfrei gleiten kann.

Auf der zum Messband 10 gerichteten Oberfläche 28a weist die Sensoranordnung 20 wenigstens einen Magnetfeldsensor 21 auf. Dieser umfasst vorzugsweise eine Mehrzahl von in Reihe angeordneter Hall-Sensoren 21a, 21b, 21c, welche zum Auslesen des Messbands 10 ausgebildet sind und parallel zur Verlaufsrichtung des Messbands ausgerichtet sind.

**Fig. 4c** zeigt eine zugehörige Schnittansicht des erfindungsgemäßen Messsystems 30 aufweisend eine Sensoranordnung 20 und das darin eingelegte Messband 10. Wie in der Figur gezeigt, kann zur Optimierung des Magnetflusses ein die Führungsschiene 25 umgebendes Jochelement 26 wie oben beschrieben vorgesehen sein. Alternativ oder zusätzlich kann die Sensoranordnung 20 einen Flussverstärker 23 aufweisen, welcher zur Konzentration eines vom Messband 10 abgegebenen Magnetfelds ausgebildet bzw. angeordnet ist. Der Flussverstärker 23 umfasst vorzugsweise ein metallisches Element mit homogenem Querschnitt, welches sich parallel zur Verlaufsrichtung L des Messbands 10 erstreckt und auf einer vom Messband 10 abgewandten Seite des Magnetfeldsensors 21 angeordnet ist.

Durch den oberhalb bzw. rückseitig des Magnetfeldsensors 21 angeordneten Flussverstärker 23 wird gegenüber der Anordnung ohne Flussverstärker (vgl. **Fig. 5a**) eine optimierte Ausrichtung bzw. Konzentration des jeweils von den unterschiedlichen Bereichen 14a,14b des Messbands 10 erzeugten Magnetfelds 24a',24b',24c' derart erzielt, dass der Fluss im Wesentlichen orthogonal durch den Magnetfeldsensor 21 bzw. durch die jeweiligen Hall-Elemente 21a,21b,21c fließt und so ein stärkerer Magnetfluss mit weniger Streuung entsteht (vgl. **Fig. 5b**)**.** Hierdurch wird die Auslesung der Positionskodierung optimiert. Zusätzlich kann hierdurch der Abstand zwischen Messband 10 und Magnetfeldsensor 21 vergrößert werden, wodurch die Auslegung des Systems insbesondere hinsichtlich notwendiger Toleranzen vereinfacht wird.

Die oben beschriebenen Ausführungsformen sind lediglich beispielhaft, wobei die Erfindung keineswegs auf die in den Figuren gezeigten Ausführungsformen beschränkt ist.

## Patentansprüche

1. Messband zur Bestimmung der Position eines Fahrkorbs (42) in einem Aufzugschacht (41), welches vertikal im Aufzugschacht und vorzugsweise sich über wenigstens zwei Gebäudestockwerke (43a,43b,43c,43d) erstreckend anordenbar ist, aufweisend einen bandförmigen Grundkörper (11) und eine mittels einem Magnetfeldsensor auslesbare Positionskodierung aus ferromagnetischem Material, **dadurch gekennzeichnet, dass** der bandförmige Grundkörper (11) aus Textilmaterial gebildet ist, und dass die Positionskodierung in den Grundkörper eingebracht oder auf einer Oberfläche (10a) des Grundkörpers aufgebracht angeordnet ist.

2. Messband nach Anspruch 1, **dadurch gekennzeichnet, dass** die Positionskodierung derart ausgebildet ist, dass diese bei externer Anregung mittels einem oder mehreren Permanentmagneten ein temporäres und durch den Magnetfeldsensor auslesbares Magnetfeld ausbildet.

3. Messband nach Anspruch 1 oder 2, **dadurch gekennzeichnet, dass** der bandförmige Grundkörper (11) aus Textilmaterial, insbesondere Textilfaser, gewebt oder gewirkt ist.

4. Messband nach einem der Ansprüche 1 bis 3, **dadurch gekennzeichnet, dass** das ferromagnetische Material der Positionskodierung in den Grundkörper (11) eingebracht, insbesondere eingewebt ist, wobei das ferromagnetische Material eine Vielzahl an längs zur Erstreckungsrichtung des Grundkörpers verlaufende Kettfäden (13b) und/oder quer zur Erstreckungsrichtung des Grundkörpers verlaufende Schussfäden (13a), vorzugsweise aus Stahldraht, aufweist.

5. Messband nach einem der Ansprüche 1 bis 3, **dadurch gekennzeichnet, dass** das ferromagnetische Material der Positionskodierung auf eine Oberfläche (10a) des Grundkörpers (11) aufgedruckt, insbesondere mittels Ferritpulver aufgedruckt, ist.

6. Messband nach einem der Ansprüche 1 bis 5, **dadurch gekennzeichnet, dass** die Positionskodierung eine Vielzahl von in Längsrichtung (L) des Grundkörpers (11) aufeinander folgende und mittels Magnetsensor magnetisch unterscheidbare Bereiche (14a, 14b), vorzugsweise mit jeweils homogener Erstreckung (L1) in Längsrichtung (L), aufweist.

7. Messband nach Anspruch 6, **dadurch gekennzeichnet, dass** die magnetisch unterscheidbaren Bereiche (14a, 14b) zum jeweiligen Zusammenwirken mit vorzugsweise seitlich des Messbands (10) angeordneten Permanentmagneten (22a,22b) unterschiedlicher Polung ausgebildet sind.

8. Messband nach einem der Ansprüche 6 oder 7, **dadurch gekennzeichnet, dass** die magnetisch unterscheidbaren Bereiche (14a,14b) jeweils durch eine vorzugsweise homogen meanderförmige Ausbildung oder Anordnung eines ferromagnetischen Materials gebildet sind, und/oder dass die magnetisch unterscheidbaren Bereiche (14a, 14b) in Längsrichtung (L) des Grundkörpers (11) alternierend, sequentiell oder absolut kodiert angeordnet sind.

9. Messband nach einem der vorhergehenden Ansprüche, **dadurch gekennzeichnet, dass** der Grundkörper (11) in Längsrichtung (L) eingearbeitete, insbesondere eingewebte oder eingewirkte, und vorzugsweise nicht-kraftaufnehmend ausgebildete Funktions- und/oder Signalleitungen aufweist.

10. Messband nach einem der vorhergehenden Ansprüche, **dadurch gekennzeichnet, dass** das Messband (10) eine auf dem Grundkörper (11) aufgebrachte und die Positionskodierung abdeckende Abdeckschicht, insbesondere aus gewebtem oder gewirktem Textilmaterial aufweist.

11. Messsystem aufweisend ein Messband (10) gemäß einem der vorhergehenden Ansprüche und eine Sensoranordnung (20) aufweisend wenigstens einen Magnetfeldsensor (21) zur Auslesung der Positionskodierung des Messbands (10).

12. Messsystem nach Anspruch 11, wobei die Sensoranordnung (20) wenigstens einen Permanentmagneten (22) zur temporären Magnetisierung des ferromagnetischen Materials der Positionskodierung des Messbands (10) aufweist, und wobei der Magnetfeldsensor (21) zum Auslesen des dabei erzeugten temporären Magnetfelds (24) ausgebildet ist.

13. Messsystem nach einem der Ansprüche 11 oder 12, **dadurch gekennzeichnet, dass** der Magnetfeldsensor (21) wenigstens einen, vorzugsweise eine Mehrzahl von in Reihe angeordneter Hall-Sensoren aufweist, welche parallel zur Verlaufsrichtung (L) des Messbands (10) angeordnet sind.

14. Messsystem nach einem der Ansprüche 11 bis 13, **dadurch gekennzeichnet, dass** die Sensoranordnung (20) einen Flussverstärker (23) zur Konzentration eines von dem Messband (10) abgegebenen Magnetfelds aufweist.

15. Aufzugsystem mit einem Aufzugschacht (41) und einen darin verfahrbar angeordneten Fahrkorb (42), welches ein Messsystem (30) zur Bestimmung der Position des Fahrkorbs (42) im Aufzugschacht (41) gemäß einem der Ansprüche 11 bis 14 aufweist.

## Claims

1. Measuring tape for determining the position of an elevator car (42) in an elevator shaft (41), said measuring tape being vertically disposable in the elevator shaft and preferably being disposable so as to extend across at least two building floors (43a, 43b, 43c, 43d), said measuring tape having a tape-shaped base body (11) and a position coding which is capable of being read out by means of a magnetic field sensor and is made of ferromagnetic material, **characterized in that** the tape-shaped base body (11) is made of textile material and **in that** the position coding is disposed so as to be inserted into the base body or so as to be applied to a surface (10a) of the base body.

2. Measuring tape according to claim 1, **characterized in that** the position coding is realized in such a manner that it produces a magnetic field which is temporary and capable of being read out by means of the magnetic field sensor when being externally excited by means of one or several permanent magnet(s).

3. Measuring tape according to claim 1 or 2, **characterized in that** the tape-shaped base-body (11) is woven or knitted from textile material, in particular textile fiber.

4. Measuring tape according to any one of claims 1 to 3, **characterized in that** the ferromagnetic material of the position coding is inserted into, in particular woven into, the base body (11), the ferromagnetic material having a plurality of warp threads (13b) running longitudinally to the direction in which the base body extends and/or weft threads (13a) running transversely to the direction in which the base body extends, preferably made of steel wire.

5. Measuring tape according to any one of claims 1 to 3, **characterized in that** the ferromagnetic material of the position coding is imprinted on a surface (10a) of the base body (11), in particular imprinted by means of ferrite powder.

6. Measuring tape according to any one of claims 1 to 5, **characterized in that** the position coding has a plurality of areas (14a, 14b) which follow one after the other in the longitudinal direction (L) of the base body (11) and are magnetically distinguishable by means of a magnetic sensor, each area preferably having a homogeneous dimension (L1) in the longitudinal direction (L).

7. Measuring tape according to claim 6, **characterized in that** the magnetically distinguishable areas (14a, 14b) are realized for the respective interaction with permanent magnets (22a, 22b) which are of different polarity and which are disposed preferably laterally to the measuring tape (10).

8. Measuring tape according to claim 6 or 7, **characterized in that** the magnetically distinguishable areas (14a, 14b) each are realized by a preferably homogeneously meandering design or arrangement of a ferromagnetic material, and/or **in that** the magnetically distinguishable areas (14a, 14b) are disposed in an alternating manner, sequentially or in an absolutely encoded manner in the longitudinal direction (L) of the base body (11).

9. Measuring tape according to any one of the preceding claims, **characterized in that** the base body (11) has function and/or signal lines which are incorporated, in particular woven in or knitted in, in the longitudinal direction (L) and which are preferably realized in a non-force-absorbing manner.

10. Measuring tape according to any one of the preceding claims, **characterized in that** the measuring tape (10) has a cover layer which is applied to the base body (11) and covers the position coding and which is in particular made of woven or knitted textile material.

11. Measuring system, comprising a measuring tape (10) according to any one of the preceding claims and a sensor arrangement (20) having at least one magnetic field sensor (21) for reading out the position coding of the measuring tape (10).

12. Measuring system according to claim 11, wherein the sensor arrangement (20) has at least one permanent magnet (22) for a temporary magnetization of the ferromagnetic material of the position coding of the measuring tape (10), and wherein the magnetic field sensor (21) is realized for reading out the temporary magnetic field generated in this process.

13. Measuring system according to claim 11 or 12, **characterized in that** the magnetic field sensor (21) has at least one Hall sensor, preferably a majority of Hall sensors which are disposed in a row and which are disposed parallel to the running direction (L) of the measuring tape (10).

14. Measuring system according to any one of claims 11 to 13, **characterized in that** the sensor arrangement (20) has a flux amplifier (23) for the concentration of a magnetic field delivered by the measuring tape (10).

15. Elevator system having an elevator shaft (41) and an elevator car (42) movably disposed therein, said elevator system having a measuring system (30) for determining the position of the elevator car (42) in the elevator shaft (41) according to any one of claims 11 to 14.

## Revendications

1. Ruban à mesurer pour déterminer la position d'une cabine (42) dans une cage d'ascenseur (41), ledit ruban à mesurer étant capable d'être disposé verticalement dans la cage d'ascenseur et, de préférence, capable d'être disposé de manière à s'étendre sur au moins deux étages (43a, 43b, 43c, 43d) d'un bâtiment, ledit ruban à mesurer ayant un corps de base (11) en forme de ruban et un codage de position en matériau ferromagnétique qui est capable d'être lu au moyen d'un capteur de champ magnétique, **caractérisé en ce que** le corps de base (11) est réalisé d'un matériau textile et **en ce que** le codage de position est disposé de manière à être inséré dans le corps de base ou de manière à être appliqué sur une surface (10a) du corps de base.

2. Ruban à mesurer selon la revendication 1, **caractérisé en ce que** le codage de position est réalisé de manière qu'il produit un champ magnétique qui est temporaire et capable d'être lu par un capteur de champ magnétique lors d'une excitation externe au moyen d'un ou de plusieurs aimant(s) permanent(s).

3. Ruban à mesurer selon la revendication 1 ou 2, **caractérisé en ce que** le corps de base (11) en forme de ruban est tissé ou tricoté en matériau textile, notamment en fibre textile.

4. Ruban à mesurer selon l'une quelconque des revendications 1 à 3, **caractérisé en ce que** le matériau ferromagnétique du codage de position est inséré, notamment tissé, dans le corps de base (11), le matériau ferromagnétique ayant une pluralité de fils de chaîne (13b) s'étendant longitudinalement par rapport à la direction dans laquelle s'étend le corps de base et/ou de fils de trame (13a) s'étendant transversalement par rapport à la direction dans laquelle s'étend le corps de base.

5. Ruban à mesurer selon l'une quelconque des revendications 1 à 3, **caractérisé en ce que** le matériau ferromagnétique du codage de position est imprimé sur une surface (10a) du corps de base (11), notamment imprimé au moyen de poudre de ferrite.

6. Ruban à mesurer selon l'une quelconque des revendications 1 à 5, **caractérisé en ce que** le codage de position a une pluralité de zones (14a, 14b) qui se suivent dans la direction longitudinale (L) du corps de base (11) et qui sont distinguables magnétiquement au moyen du capteur de champ magnétique, chaque zone (14a, 14b), de préférence, ayant une dimension homogène (L1) dans la direction longitudinale (L).

7. Ruban à mesurer selon la revendication 6, **caractérisé en ce que** les zones (14a, 14b) qui sont distinguables magnétiquement sont réalisées de manière à interagir avec des aimants permanents (22a, 22b) qui ont une polarité différente et qui sont, de préférence, disposés sur le côté du ruban à mesurer (10).

8. Ruban à mesurer selon la revendication 6 ou 7, **caractérisé en ce que** chaque zone (14a, 14b) qui est distinguable magnétiquement est réalisée par un agencement ou une conception d'un matériau ferromagnétique, de préférence, en forme de méandre homogène, et/ou **en ce que** les zones (14a, 14b) qui sont distinguables magnétiquement sont disposées de manière alternée, de manière séquentielle ou de manière absolument codée dans la direction longitudinale (L) du corps de base (11).

9. Ruban à mesurer selon l'une quelconque des revendications précédentes, **caractérisé en ce que** le corps de base (11) a des lignes de fonction et/ou de signaux qui sont incorporées, notamment tissées ou tricotées, dans celui-ci dans la direction longitudinale (L) et qui, de préférence, sont réalisées de manière à ne pas absorber les forces.

10. Ruban à mesurer selon l'une quelconque des revendications précédentes, **caractérisé en ce que** le ruban à mesurer (10) a une couche de recouvrement qui est appliquée sur le corps de base (11) et recouvre le codage de position et qui est notamment réalisée en matériau textile tissé ou tricoté.

11. Système de mesure comprenant un ruban à mesurer (10) selon l'une quelconque des revendications précédentes et un agencement de capteur (20) ayant au moins un capteur (21) de champ magnétique pour la lecture du codage de position du ruban à mesurer (10).

12. Système de mesure selon la revendication 11, dans lequel l'agencement de capteur (20) a au moins un aimant permanent (22) pour la magnétisation temporaire du matériau ferromagnétique du codage de position du ruban à mesurer (10), et dans lequel le capteur (21) de champ magnétique est configuré pour lire le champ magnétique (24) temporaire généré dans ce processus.

13. Système de mesure selon la revendications 11 ou 12, **caractérisé en ce que** le capteur (21) de champ magnétique a au moins un capteur à effet Hall, de préférence une majorité de capteurs à effet Hall disposés en série et disposés parallèlement à la direction de tracé (L) du ruban à mesurer (10).

14. Système de mesure selon l'une quelconque des revendications 11 à 13, **caractérisé en ce que** l'agencement de capteur (20) a un amplificateur de flux (23) pour la concentration d'un champ magnétique émis par le ruban à mesurer (10).

15. Système d'ascenseur ayant une cage d'ascenseur (41) et une cabine (42) disposée de manière mobile dans celle-ci, ledit système d'ascenseur ayant un système de mesure (30) pour déterminer la position de la cabine (42) dans la cage d'ascenseur (41) selon l'une quelconque des revendications 11 à 14.
